# EUROPÄISCHE PATENTANMELDUNG

(11) **EP 3 995 240 A1**
(43) Veröffentlichungstag der Anmeldung: **11.05.2022**
(21) Anmeldenummer: 21206155.0
(22) Anmeldetag: 03.11.2021
(51) Int. Cl.: B23B 7/06, B23B 13/02, B23B 13/12, B23B 13/08

(54) **MATERIALSTANGENMAGAZIN ZUM FÜHREN VON MATERIALSTANGEN AN EINEM DREHAUTOMATEN SOWIE SYSTEM AUS EINEM SOLCHEN MAGAZIN UND DREHAUTOMATEN**

(30) Priorität: 06.11.2020 DE 102020129265
(71) Anmelder: FMB Maschinenbaugesellschaft mbH & CO. KG, 97906 Faulbach (DE)
(72) Erfinder: SCHWAB, Steffen, 97901 Altenbuch (DE)
(74) Vertreter: Blumbach · Zinngrebe Patentanwälte PartG mbB

(57) **Zusammenfassung**

Die Erfindung betrifft ein Materialstangenmagazin zum Führen von Materialstangen an einem Drehautomaten sowie ein System aus einem solchen Magazin und Drehautomaten mit wenigstens einem, insbesondere einem entlang einer Längsachse des Materialstangenmagazins verschiebbaren Spindelstock. Das Materialstangenmagazin beinhaltet ein materialstangenführendes Kanalsystem mit einem Kanalöffnungssystem und ist dadurch gekennzeichnet, dass das Kanalsystem des Materialstangenmagazins einen ersten, äußeren Führungskanal (14.3, 14.4) und einen im Inneren des ersten Führungskanal relativ zu diesem entlang zur Längsrichtung beweglich gelagerten zweiten, inneren Führungskanal (14.9) besitzt, wobei der zweite, innere Führungskanal (14.9) an den Spindelstock (14.10) des Drehautomaten koppelbar ist oder gekoppelt ist, und zwar zum Bewegen des zweiten, inneren Führungskanals in Folge einer Positionsveränderung des Spindelstocks entlang einer Längsachse des Materialstangenmagazins im Schleppbetrieb mit diesem synchron entlang der Längsachse und relativ zum ersten Führungskanal.

## Beschreibung

Die vorliegende Erfindung betrifft ein Materialstangenmagazin zum Führen von Materialstangen an einem Drehautomaten sowie ein System aus einem solchen Magazin und Drehautomaten.

Drehautomaten zur spangebenden Bearbeitung von stangenförmigem Halbzeug, das im Folgenden als Materialstangen, in Kurzform lediglich als Stange bezeichnet wird, sind grundsätzlich bekannt und können in drei verschiedene Bauformen, den Kurzdrehautomaten, den Langdrehautomaten und den Hybriddrehautoamten, unterteilt werden.

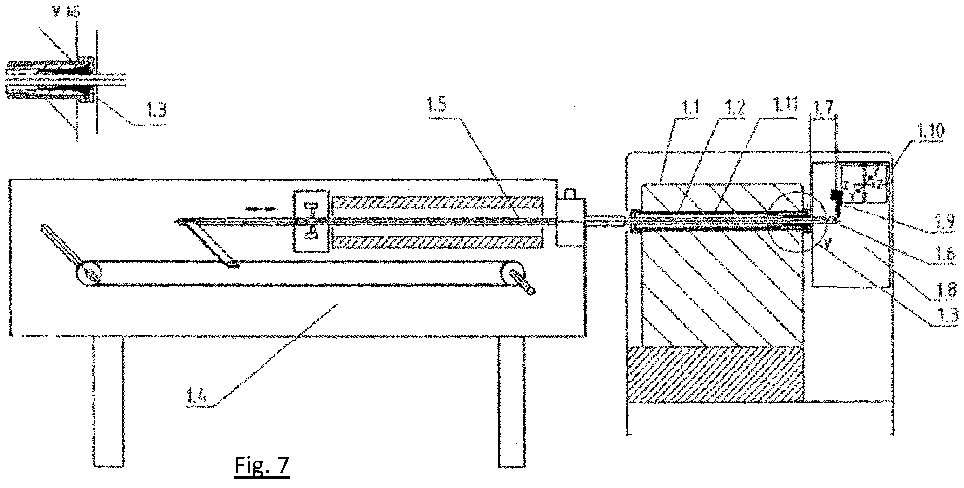

Bei einem Kurzdrehautomaten, wie z.B. bei Fig. 7 gezeigt, handelt es sich um ein Gerät mit einem feststehenden Spindelstock 1.1, in dem die Spindel 1.2 und der Antrieb gelagert sind. Am prozeßraumseitigen Ende der Spindel befindet sich ein Spannmittel 1.3, in der Regel eine Spannzange 1.3, wobei es sich hier beispielsweise auch um ein Spannfutter handeln kann. Die Spindel weist eine Längsbohrung 1.11 auf, so dass von der Spindelstockrückseite über einen Stangenlader 1.4, vorzugsweise ein Stangenlademagazin 1.4, eine Stange 1.5 durch die Spindel geschoben werden kann, mit dem Ziel, dass Stangenende 1.6 spangebend zu bearbeiten. Dabei wird dieses Stangenende 1.6 dergestalt in der Spannzange 1.3 gespannt, dass ein Überstand 1.7, der im Wesentlichen der Werkstücklänge entspricht, in den Prozessraum 1.8 hineinragt. Alle wesentlichen Bewegungen Zustell- und Vorschubbewegungen, die zur Bearbeitung notwendig sind, werden von den Werkzeugschlitten 1.9 ausgeführt, insbesondere auch die Bewegung in der Z-Achse 1.10, parallel zur Spindel- und Drehautomatenmitte.

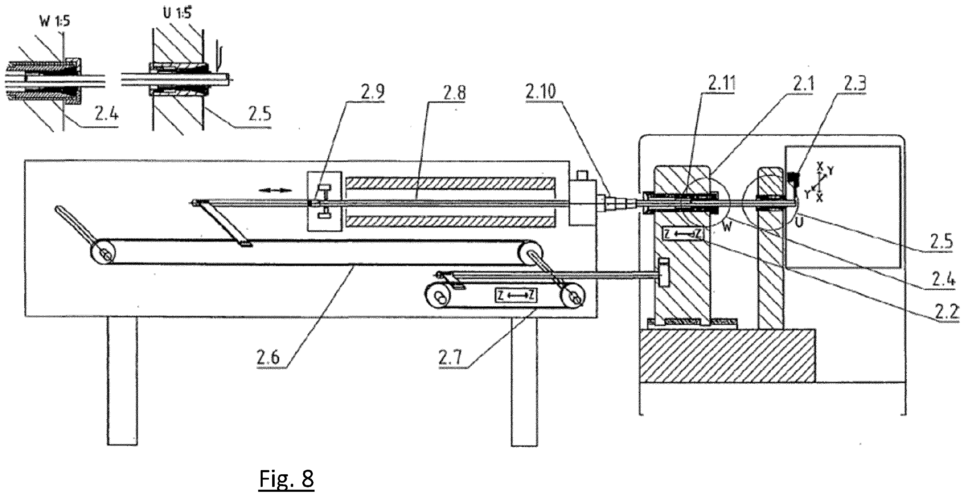

Ein Langdrehautomat, wie z.B. bei Fig. 8 gezeigt, unterscheidet sich im Wesentlichen durch zwei Punkte von dem Kurzdreher. Zum einen ist der Spindelstock 2.1 in Richtung der Z-Achse 2.2 verfahrbar. Diese Verfahrbewegung wird durch eine eigene, i.d.R. NC-gesteuerte Antriebsache ausgeführt. Bearbeitungsvorgänge in Richtung der Z-Achse, z.B. Langdrehprozesse, werden hier durch die Spindelstockbewegung ausgeführt, wobei der Spindelstock eine drehbar angetriebene Hohlspindel 2.11 beinhaltet, an deren Werkzeug- bzw. prozessraumseitigen Ende eine Spannzange 2.4 vorgesehen ist, mit dem eine aus dem Lademagazin 2.6 durch die Spindel 2.11 geführte Materialstange 2.8 gespannt wird. Das im Prozessraum des Drehautomaten angeordnete Werkzeug 2.3 führt nur An- und Zustellbewegungen in X- und Y-Richtung aus. Die für den Langdrehprozess notwendigen Vorschubbewegungen in Richtung der Z-Achse werden durch die Bewegung von Spindelstock und Materialstange gegen ein in Z-Richtung feststehendes Werkzeug ausgeführt. Weiter verfügen, wie in der Fig. 8 dargestellt ist, Langdrehautomaten neben der Spannzange 2.4 über eine in Z-Richtung feststehende Führungsbuchse 2.5, die zur Führung der Materialstange dient. Das Lademagazin umfasst neben einem stangenführenden Kanal eine in Z-Richtung angetriebene Schubstange, an deren Ende eine Spannhülse 2.9 zur Aufnahme der Materialstange vorgesehen ist. Mit der Schubstange erfolgt die Beladung des Drehautomaten bzw. Nachführung der Materialstangen. Um ein Herausziehen der Materialstange 2.8 aus der schubstangenseitigen Spannhülse 2.9 während den, durch die Spindelstockbewegungen verursachten, Längsbewegungen der Materialstange zu verhindern, ist in dem Lademagazin eine zuschaltbare Synchronisierungseinrichtung 2.7 vorgesehen. Mit dieser Einrichtung werden die Bewegungen der Schubstange mit denen der Materialstange synchronisiert.

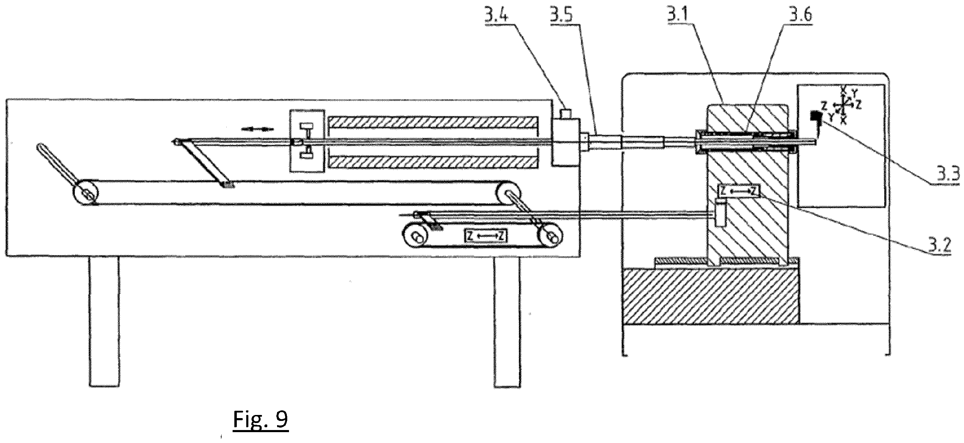

Als neuere Entwicklung hat sich ein Drehautomat am Markt etabliert, der im Folgenden auch als Hybriddrehautomat bezeichnet wird. Ein solcher, im Wesentlichen Kurz- und Langdrehautomat vereinigender Hybriddrehautomat, wie z.B. bei Fig. 9 gezeigt, arbeitet mit einem fahrbaren Spindelstock 3.1. Der Aufbau basiert dabei auf dem Konzept eines Langdrehautomaten und kann auch in Kombination mit einer Führungsbuchse so betrieben werden. Wahlweise lässt sich jedoch die Führungsbuchse ausbauen, um der Arbeitsweise eines Kurzdrehautomaten nahezukommen. Dieses Variante wird in erster Linie genutzt, um bei der Fertigung kürzerer Bauteile die Länge des nicht nutzbaren Materialstangenendes zu verkürzen und somit Kosten zu sparen. Während bei den Langdrehautomaten der Spindelstockweg ca. 350mm (Größenordnung) beträgt, liegt dieser Wert bei den Hybridvarianten heute bei bis zu 550mm. Darüber hinaus gibt es auch Hybriddrehautoamten, die ausschließlich ohne Führungsbuchse konzipiert werden. D.h. der Drehautomat arbeitet ohne Einsatz der Führungsbuchse im Wesentlichen wie ein Kurzdreher, besitzt hingegen einen in Z-Achse 3.2 beweglichen und NC gesteuerten Spindelstock. Wegen der fehlenden Führungsbuchse sind die Längsdrehprozesse modifiziert, Vorschubbewegungen in Z-Achse 3.2 sind sowohl über den Werkzeugschlitten 3.3 als auch über den Spindelstock 3.1 darstellbar.

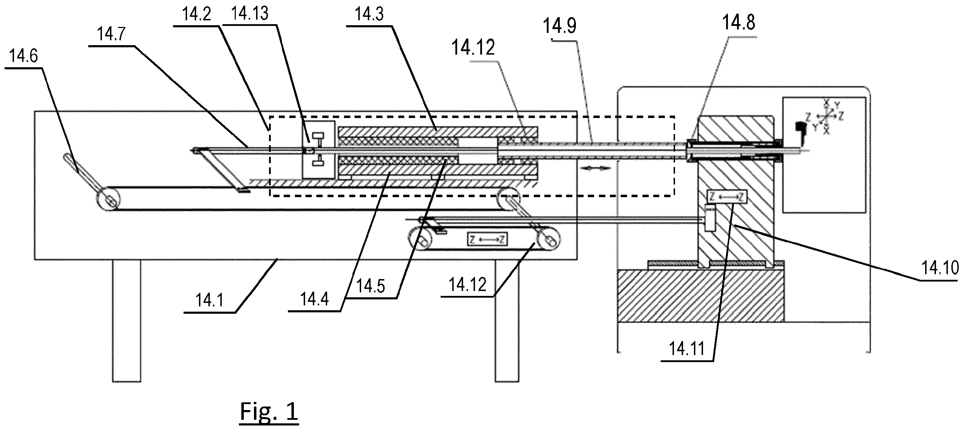

Lademagazine führen die Materialstangen dem Drehautomaten zu und müssen diese während des gesamten Bearbeitungsvorganges sicher führen. Wesentliche Aufgabe ist dabei die Unterdrückung von Vibrationen. Bei Stangenlängen von bis zu 4m und Durchmessern von 1mm bis zu 100mm können, in Abhängigkeit von Durchmessern und Stangenquerschnitten (rund, rohrförmig, hexagonal oder quadratisch) Drehzahlen von bis zu 15.000 1/min auftreten. Es ist deshalb zur Schwingungsprophylaxe und -unterdrückung unabdingbar, die Materialstangen so exakt wie möglich zu führen. Dies kann innerhalb des Lademagazins durch Kanalgestaltung und Ölbefüllung der Kanäle weitgehend sichergestellt werden. Einen Schwachpunkt stellt aber der Übergangsbereich zwischen dem Lademagazin und der Drehmaschine dar. An der Stangenaustrittseite werden Lademagazine deshalb üblicherweise mit einer Lünette 3.4 (vgl. Fig. 9) ausgestattet, die eine nochmalige letzte Stützstelle, bestehend aus einer verstellbaren Rollen oder Backenabstützung bieten. Danach folgt ein Übergangsrohr 3.5 (vgl. Fig. 9), welches bei Lang- und Hybriddrehern zur Anpassung an die Spindelstockbewegung i.d.R. als Teleskoprohr 3.5 (oder auch 2.10 bei Fig. 8) ausgeführt ist, sowie die eigentliche Hohlspindel 3.6 (vgl. Fig. 9, aber auch Fig. 7, 1.2 und Fig. 8, 2.11). Am Ende dieser Hohlspindel, dort, wo diese in den Prozessraum (vgl. Fig. 7, 1.8) überführt, befindet sich das Spannmittel (vgl. Fig. 7, 1.3 und Fig. 8, 2.4). Es ist daher ein erheblicher Übergangsbereich vorhanden, über den hinweg die Materialstange ohne Abstützung bleibt. Bei einem Übergangsrohr von ca. 400mm und einer Spindellänge von 800mm wird hier oft eine Größenordnung von 1.200mm und mehr erreicht.

Zwar wäre es grundsätzlich möglich, durch entsprechende Durchmesserreduzierung der Spindel und des Übergangsrohres die Führungsqualität zu verbessern, wirtschaftliche Gründe sprechen jedoch häufig dagegen, da es sich hier um Teile handelt, die bei Umrüstarbeiten von einem Werkstück auf ein anderes mit getauscht werden müssten. Zudem liegen diese Teile in einem Anlagenbereich, der nur schwer zugänglich ist. Aus diesem Grunde wird von dieser Durchmesserreduzierung nur ungern Gebrauch gemacht bzw. wird diese Durchmesserreduzierung im Wesentlichen auf sog. Einzweckmaschinen, die selten oder nie umgerüstet werden, beschränkt. Bei den Lang- und Hybriddrehmaschinen verlängert sich der Übergangsbereich nochmals durch die zusätzliche Spindelstockbewegung, so dass Übergänge von bis zu 1.600mm Länge oder auch mehr entstehen können, in denen die Stange ohne Abstützung bleibt. Diese Übergangsbereiche bilden dann die Entstehungszonen für das Auftreten von Schwingungen, mit der Folge, dass eine Reduzierung der Drehzahlen notwendig wird, somit die Produktivität der Anlage leidet.

Ein Wesentlicher Ausgangspunkt der Schwingungsentstehung ist somit das Zusammenspiel eines feststehenden Lademagazins und eines beweglichen Spindelstocks. Um die Abstände zwischen den Stützstellen, die zu einem Aufschwingen der Stange führen können zu verringern, wurde gemäß WO 2010/149342 A1 ein Lademagazin, wie z.B. in Fig. 10 gezeigt, vorgeschlagen. Das Lademagazin 4.1 besitzt hierbei ein in Längsrichtung verschiebbares, z.B. auf einem Schienensystem 4.8 gelagertes, materialstangenführendes Kanalsystem 4.2, wobei zwischen Kanalsystem und Spindelstock 4.10 ein Übergangsrohr 4.9 vorgesehen ist, um hierdurch insgesamt den Abstand zur Spindel, d.h. insbesondere zwischen Lademagazin und Spannzange, in jeder Bearbeitungssituation konstant zu halten. Ein z.B. als Hybriddrehautomat ausgebildeter Drehautomat, weist einen in Richtung der Z-Achse 4.11 verschiebbaren Spindelstock 4.10 auf, mit welchem Vorschubbewegungen während der Bearbeitung in Richtung der Z-Achse ausführbar sind. Das in Längsrichtung bewegliche Kanalsystem 4.2 ist zur Beladung mit Materialstangen in einen Oberkanal 4.3 und einen Unterkanal 4.4 unterteilt, wobei der Oberkanal als ein Kanalöffnungssystem 4.5 vorgesehen ist. Eine Schubstange mit einer Spannhülse 4.7 dient zum Halten einer Materialstange und ist über einen Antrieb 4.6 in Längsrichtung durch die Spindelstockrückseite dem Drehautomaten zuführbar. Das Kanalsystem 4.2 ist über das Übergangsrohr 4.9 mit dem Spindelstock 4.10 kraftschlüssig verbunden, sodass die bei den Spindelstockbewegungen in Z-Richtung auftretenden Zug- und Druckkräfte über das Übergangsrohr auf das ebenfalls in der Z-Achse beweglich gelagerte Kanalsystem übertragbar sind.

Es hat sich jedoch gezeigt, dass die Leistung zum Bewegen des zusätzlichen Gewichts des Kanalsystems nicht von jedem Drehautomaten bereitgestellt werden kann.

Eine Aufgabe der vorliegenden Erfindung ist es daher, einen neuen, alternativen Weg aufzuzeigen, mit welchem der Abstand zwischen dem Kanalsystem und der Spannzange eines Lang- oder Hybriddrehautomaten über im Wesentlichen alle Betriebsphasen hinweg auf eine reduzierte, insbesondere konstante Länge gehalten werden kann, dies jedoch bei deutlicher Gewichtsreduktion und somit wesentlichen geringerer aufzubringender Kraft bzw. hierfür benötigter Leistung.

Gemäß Erfindung wird diese Aufgabe insbesondere durch ein Materialstangenmagazin zum Führen von Materialstangen an einem Drehautomaten sowie System aus einem solchen Magazin und Drehautomatenmit den Merkmalen gemäß anhängiger unabhängige Ansprüche gelöst, wobei die jeweils abhängigen Ansprüche jeweils bevorzugte Weiterbildungen umfassen.

Die Erfindung schlägt folglich ein Materialstangenmagazin vor, welches ein materialstangenführendes Kanalsystem mit einem Kanalöffnungssystem beinhaltet, zum Führen von Materialstangen an einem Drehautomaten, insbesondere zum Be- und/oder Entladen des Drehautomaten, mit wenigstens einem, insbesondere entlang einer Längsachse des Materialstangenmagazins verschiebbaren Spindelstock, bei welchem das Kanalsystem des Materialstangenmagazins einen ersten, äußeren Führungskanal und einen im Inneren des ersten Führungskanal relativ zu diesem entlang zur Längsrichtung beweglich gelagerten zweiten, inneren Führungskanal besitzt, wobei der zweite, innere Führungskanal an den Drehautomaten koppelbar und in Folge einer Positionsveränderung des Spindelstocks entlang der Längsachse des Materialstangenmagazins zusammen mit diesem im Schleppbetrieb synchron entlang der Längsachse und relativ zum ersten Führungskanal bewegbar ist.

Entsprechend schlägt die Erfindung ferner ein System vor, welches einen Drehautomaten und ein Materialstangenmagazin, welches ein materialstangenführendes Kanalsystem mit einem Kanalöffnungssystem beinhaltet, zum Führen von Materialstangen an dem Drehautomaten, insbesondere zum Be- und/oder Entladen des Drehautomaten, mit wenigstens einem, insbesondere entlang einer Längsachse des Materialstangenmagazins verschiebbaren Spindelstock umfasst. Das Kanalsystem des Materialstangenmagazins besitzt einen ersten, äußeren Führungskanal und einen im Inneren des ersten Führungskanals relativ zu diesem entlang zur Längsrichtung beweglich gelagerten zweiten, inneren Führungskanal. Der zweite, innere Führungskanal ist an den Spindelstock des Drehautomaten koppelbar oder bereits gekoppelt, und zwar zum Bewegen des zweiten, inneren Führungskanals in Folge einer Positionsveränderung des Spindelstocks entlang der Längsachse des Materialstangenmagazins im Schleppbetrieb mit diesem synchron entlang der Längsachse und relativ zum ersten Führungskanal.

Von Vorteil ist also, sofern es sich bei dem Spindelstock um einen entlang einer Längsachse des Materialstangenmagazins verschiebbaren Spindelstock handelt, wie es bei einem Lang- oder Hybriddrehautomaten der Fall ist, dass durch den beweglichen Spindelstock das Bewegen des zweiten, inneren Führungskanals relativ zum ersten Führungskanal synchron im Schleppbetrieb bewirkt werden kann. Handelt es sich bei dem Spindelstock hingegen um einen entlang der Längsachse des Materialstangenmagazins im Wesentlichen feststehenden Spindelstock, wie es bei einem Kurzdrehautomaten der Fall ist, kann durch den Spindelstock das Bewegen des zweiten, inneren Führungskanals relativ zum ersten Führungskanal unterbunden werden.

Ein weiterer wesentlicher Vorteil ist folglich darin zu sehen, dassmit dem erfindungsgemäßen Vorgehen, insbesondere bei Nutzung mit Lang- oder Hybriddrehautomaten, lediglich der zweite, innere Führungskanal an einen entlang der Längsachse beweglichen Spindelstock des Drehautomaten zum Ausführen einer gemeinsamen synchronen Bewegung gekoppelt werden muss, und folglich ein wesentlich reduziertes Gewicht als zusätzliche Belastung von dem Spindelstock bzw. der Drehmaschinenspindel zu bewegen ist, um den Abstand zwischen dem Kanalsystem und der Spannzange auch bei einem Lang- oder Hybriddrehautomaten über im Wesentlichen alle Betriebsphasen hinweg auf einer reduzierten, insbesondere konstanten Länge zu halten. Die Führung einer Materialstange im variablen Übergangsbereich kann somit aufgrund des lediglich zweiten, inneren, entlang der Längsachse beweglich ausgestalteten und folglich zu bewegenden Führungskanals den bei Lang- oder Hybriddrehautomaten mit in Z-Achse verfahrbaren Spindelstöcken wesentlich vereinfacht werden und in Folge können auch mögliche Vibrationen und Schwingungen nochmals zusätzlich wesentlich reduziert und insbesondere jegliche potentiellen Vibrationen und Schwingungen minimiert werden. So ist folglich ein weiterer wesentlicher Vorteil darüber hinaus darin zu sehen, dass mit dem erfindungsgemäßen Vorgehen auch die Anbausituation des Lademagazins an Kurzdrehautomaten optimiert werden kann. So ist selbst bei feststehenden Spindelstöcken, bei denen bisher nach dem Stand der Technik ein Übergangsrohr zwischen Stangenaustrittsseite des Lademagazins und Eingang in die Hohlspindel zur Abdeckung der rotieren Materialstange eingebaut werden musste, ein solches nicht mehr notwendig, da jetzt der zweite, innere und entlang der Längsachse bewegliche Führungskanal an den Spindelstock des Drehautomaten gekoppelt werden kann. Da solche Übergangsrohre in der Regel ferner zunächst in universellen Längen gefertigt wurden und noch werden und anschließend auf die spezifischen Abstände in Abhängigkeit der von der Drehmaschinenbauform bestimmten Länge während der Inbetriebnahme gekürzt werden mussten bzw. müssen, kann bei Kurzdrehautomaten dieser zusätzliche Aufwand durch den entlang der Längsachse beweglichen und also flexibel ausziehbaren zweiten, inneren Führungskanal eliminiert und somit die Inbetriebnahme erleichtert werden.

Von Vorteil ist ferner, dass sich das Materialstangenmagazin im Rahmen der Erfindung sowohl zum Beladen eines Drehautomaten, also insbesondere als Lademagazin, und zum Entladen des Drehautomaten, also insbesondere als Entlademagazin, eignet.

Weitere Vorteile und Merkmale der Erfindung, insbesondere auch von bevorzugten Ausführungen sowie in den abhängigen Ansprüchen wiedergegebene Weiterbildungen, werden anhand der nachfolgenden Beschreibung unter Bezugnahme auf die beigefügte Zeichnung detaillierter beschrieben. In der Zeichnung zeigt:
- Fig. 1:: Eine erste Ausführung der Erfindung mit einem im Inneren eines ersten Führungskanals relativ zu diesem entlang zur Längsrichtung beweglich gelagerten zweiten, inneren Führungskanals eines Materialstangenmagazins
- Fign. 2a, 2b:: Jeweils eine Darstellung einer zur Fig. 1 ähnlichen Ausführungsform in einer ersten Position, in welcher der zweite Führungskanal zumindest teilweise aus dem ersten Führungskanal ausgefahren ist und einer zweiten Position, in welcher der zweite Führungskanal in den ersten Führungskanal im Wesentlichen maximal eingefahren ist.
- Fig. 3:: Eine weitere Ausführung der Erfindung mit einer Lünette zur weiteren Abstützung einer Materialstange zwischen dem Ende eines zweiten, inneren Führungskanals und Spindelstock.
- Fig. 4:: Eine weitere Ausführung der Erfindung mit einer Lünette ähnlich zur Figur 3 sowie mit einem Einsatz innerhalb eines zweiten Führungskanals aus verschleißarmen Material.
- Fig. 5:: Eine weitere Ausführung der Erfindung mit einem in Längsrichtung verschiebbaren, im Inneren eines ersten Führungskanals relativ zu diesem entlang zur Längsrichtung beweglich gelagerten zweiten, inneren Führungskanals eines Materialstangenmagazins mit einem hydraulischen oder pneumatischen Versorgungssystem, welches zur Bereitstellung einer Gleitlagerung für durch den inneren Führungskanal geführten Materialstangen mit dem Durchgang des zweiten, inneren Führungskanals zur Führung der Materialstangen kommuniziert.
- Fig. 6:: Eine weitere Ausführung der Erfindung mit einer zusätzlichen Entladevorrichtung an einem Gegenspindelstock eines Drehautomaten.
- Fig. 7:: Kurzdrehautomat mit einem Lademagazin nach Stand der Technik.
- Fig. 8:: Langdrehautomat mit einem Lademagazin nach Stand der Technik.
- Fig. 9:: Hybriddrehautomat mit einem Lademagazin nach Stand der Technik.

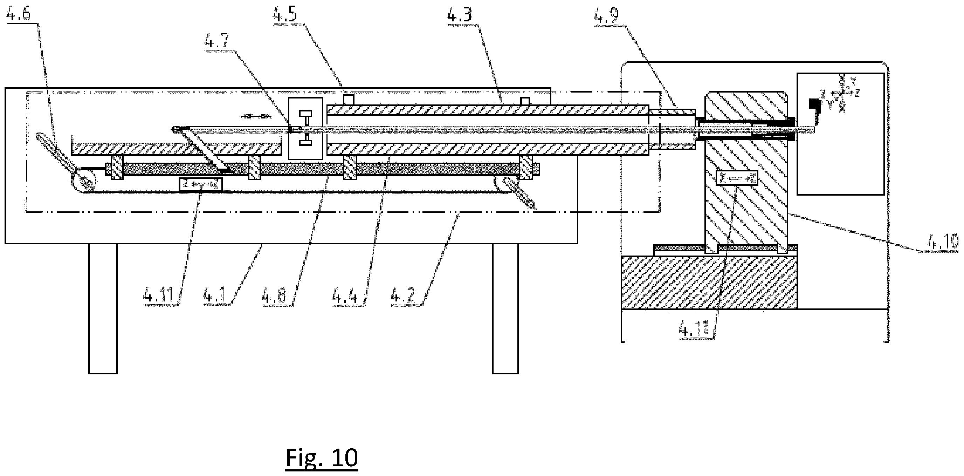

- Fig. 10:: Drehautomat mit Lademagazin mit einem in Längsrichtung verschiebbaren Führungskanal nach Stand der Technik.

Nachfolgend erfolgt unter Bezugnahme auf die beigefügte Zeichnung eine detaillierte Beschreibung bevorzugter Ausführungen im Rahmen der Erfindung.
In der Fig. 1 ist ein schematischer Querschnitt durch ein Materialstangenmagazin 14.1 mit einem materialstangenführendem Kanalsystem 14.2, zum Führen von Materialstangen an einem Drehautomaten, insbesondere zum Be- und/oder Entladen des Drehautomaten dargestellt. Wie zu erkennen, ist das dort dargestellte Materialstangenmagazin 14.1 als Lademagazin eingesetzt und wird daher nachfolgend auch kurz als Lademagazin bezeichnet. Gemäß vorliegender Erfindung beinhaltet das stangenführende Kanalsystem einen ersten, äußeren Führungskanal 14.3, 14.4 und einen im Inneren des ersten Führungskanals relativ zu diesem entlang zur Längsrichtung beweglich gelagerten zweiten, inneren Führungskanal 14.9, wobei der zweite, innere Führungskanal 14.9 an den Spindelstock 14.10 des Drehautomaten gekoppelt 14.8 ist, und zwar zum Bewegen des zweiten, inneren Führungskanals 14.9 in Folge einer Positionsveränderung des Spindelstocks entlang einer Längsachse, bei Fig. 1 entlang einer Z-Achse 14.11, des Materialstangenmagazins im Schleppbetrieb mit diesem synchron entlang der Längsachse und relativ zum ersten Führungskanal. Der zweite, innere Führungskanal 14.9 ist somit dem Grunde nach zweckmäßig flexibel ausziehbar und in den Figuren in der besonders bevorzugten Form eines Rohres ausgebildet, kann jedoch alternativ auch grundsätzlich als ein nach oben offener Kanal ausgebildet sein.

Im rechten Teil der Zeichnung ist der Drehautomat angedeutet, der zweckmäßig als Lang- oder Hybriddrehautomat ausgebildet ist, und der, wie zuvor bereits beschrieben, somit einen entlang der Z-Achse 4.11, d.h. entlang der Längsachse des Materialstangenmagazins 14.1 verschiebbaren Spindelstock 4.10 aufweist, mit dem während eines Bearbeitungsvorgangs die Vorschubbewegungen in Richtung der Z-Achse im Falle eines Hybriddrehautomat zumindest teilweise und im Falle eines Langdrehautomat im Wesentlichen vollständig ausführbar sind.

Da, wie ersichtlich und nachfolgend näher beschrieben ist, im vorliegenden Beispiel eine Kopplung zwischen dem im Inneren des ersten Führungskanals relativ zu diesem entlang zur Längsrichtung beweglich gelagerten zweiten, inneren Führungskanal und Spindelstock zum Zuführen von Materialstangen und Beladen des Drehautomaten gegeben ist, wird ein solcher Spindelstock auch als Hauptspindelstock bezeichnet.

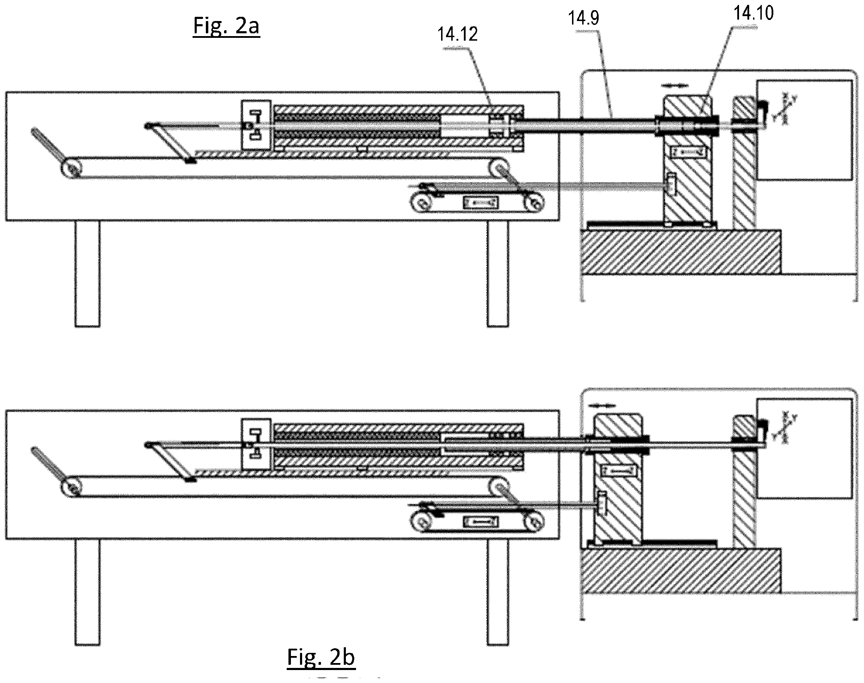

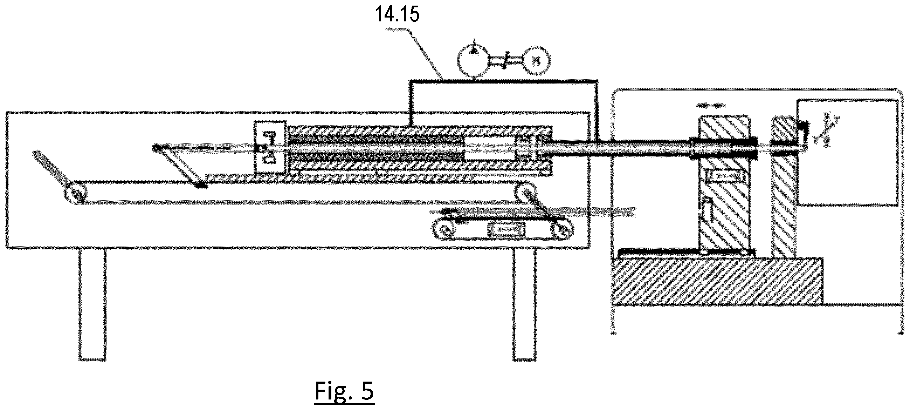

Der zweite, im Inneren des ersten Führungskanals 14.3, 14,4 gelagerte innere Führungskanal 14.9 ist folglich gemäß praktischen Ausführungen zwischen einer ersten Position, in welcher der zweite Führungskanal maximal eingefahren ist und einer zweiten Position bewegbar, in welcher der zweite Führungskanal aus dem ersten Führungskanal maximal ausgefahren ist. Die Fign. 2a, 2b zeigen hierzu jeweils eine Darstellung der Ausführungsform gemäß Fig. 1 in einer Position, in welcher der zweite Führungskanal zumindest teilweise oder weitgehend aus dem ersten Führungskanal ausgefahren ist und einer Position, in welcher der zweite Führungskanal in den ersten Führungskanal im Wesentlichen maximal eingefahren ist. Wie zu sehen, kann in Folge einer Positionsveränderung des Spindelstocks entlang der Längsachse, in den Fign. somit entlang der Z-Achse, des Materialstangenmagazins aufgrund der Kopplung mit dem zweiten, inneren Führungskanal dieser zweite, innere Führungskanal im Schleppbetrieb zwischen der ersten Position (vgl. auch Fig. 2b) und der zweiten Position (vgl. auch Fig. 2a) synchron zum Spindelstock entlang der Längsachse und relativ zum ersten Führungskanal bewegt werden. Zur Lagerung 14.5 des inneren Führungskanals im äußeren Führungskanal kann in diesem z.B. ein Wälzlager oder Rollenlager angeordnet sein. Ergänzend oder alternativ kann zur Lagerung des inneren Führungskanals im äußeren Führungskanal jedoch auch eine Gleitlagerung vorgesehen sein, wobei das Materialstangenmagazin zweckmäßig ein pneumatisches oder hydraulisches Versorgungssystem umfasst, welches mit dem Durchgang des äußeren Führungskanals, in welchem der innere Führungskanal gelagert ist, kommuniziert. Ein solches ist jedoch aus Gründen der Übersichtlichkeit lediglich bei der weiteren Ausführungsform gemäß Fig. 5 angedeutet (vgl. Bezugszeichen 14.15), jedoch ansonsten in den Figuren nicht näher dargestellt und kann auch im Übrigen, wie dem Fachmann anhand hiesiger Offenbarung ersichtlich, je nach spezifischer Ausführungsform grundsätzlich unterschiedlich ausgestaltet sein. Das in Fig. 5 angedeutete Versorgungssystem ist hierbei zweckmäßig ferner eingerichtet, zusätzlich auch mit dem Durchgang des inneren Führungskanals zu kommunizieren.

Zur Lagerung des beweglichen, insbesondere also auch flexibel ausziehbaren, zweiten, im Inneren des ersten Führungskanals 14.3, 14,4 gelagerten inneren Führungskanal 14.9, kann in weiterer bevorzugter Ausführung, z.B. gemäß Fig. 1, im in Richtung des Spindelstocks blickenden Endbereich, insbesondere an der Materialstangenaustrittsseite, des ersten Führungskanals 14.3, 14,14 eine Abstützeinrichtung 14.12 abgeordnet sein, durch welche sich der im Inneren des ersten Führungskanals gelagerte innere Führungskanal 14.9 dauerhaft erstreckt.

Das in der Fig. 1 dargestellte Lademagazin 4.1 beinhaltete Kanalsystem 4.2, in dem eine Materialstange geführt bzw. gelagert ist, besitzt zweckmäßig als ersten, äußeren Führungskanal 14.3, 14.4, einen Führungskanal, der zur Beladung mit Materialstangen geöffnet werden kann. Dazu kann im Rahmen eines Kanalöffnungssystems bevorzugt vorgesehen sein, dass der erste, äußere Führungskanal in einen Oberkanal 14.3 und einen Unterkanal 14.4 unterteilt ist, wobei der Oberkanal zum Öffnen des Kanals z.B. von dem Unterkanal abgehoben werden kann.

Der zweite, innere Führungskanal 14.9, welcher an den Spindelstock 14.10 des Drehautomaten koppelbar, bzw. gemäß Fig. 1 gekoppelt (vgl. Bezugszeichen 14.8) ist, wird zweckmäßig im Innern mit einer Hydraulikflüssigkeit, insbesondere Öl, oder einem pneumatisch einsetzbaren Gas versorgt, welches während des Drehvorgangs durch die schnell rotierenden Materialstangen in Turbulenz versetzt wird, wobei insbesondere dünne Materialstangen durch die entstehenden Wirbel im Zentrum des Kanals nochmals eine verbesserte Führung erfahren. Eine solche in den zweiten, inneren Führungskanal integrierte Flüssigkeits- oder Gasverteilung ermöglicht es folglich, die damit verbundenen positiven Effekte zur Schwingungsdämpfung bis nahe an das Spindelende zu bringen.
Eine somit in zweckmäßiger Weise vom Materialstangenmagazin umfasstes hydraulisches oder pneumatisches Versorgungssystem, welches zur Bereitstellung einer Gleitlagerung der durch den inneren Führungskanal geführten Materialstangen mit dem Durchgang des zweiten, inneren Führungskanals zur Führung der Materialstangen kommuniziert, ist jedoch aus Gründen der Übersichtlichkeit lediglich in Fig. 5 nur angedeutet (vgl. Bezugszeichen 14.15), jedoch ansonsten in den Figuren nicht näher dargestellt und kann auch im Übrigen, wie dem Fachmann anhand hiesiger Offenbarung ersichtlich, je nach spezifischer Ausführungsform grundsätzlich unterschiedlich ausgestaltet sein. Das in Fig. 5 angedeutete Versorgungssystem ist hierbei zweckmäßig ferner eingerichtet, zusätzlich auch mit dem Durchgang des äußeren Führungskanals, in welchem der innere Führungskanal gelagert ist, zu kommunizieren.

In den Figuren ist die Kopplung des zweiten, inneren Führungskanals 14.9 mit dem Spindelstock 14.10 des Drehautomaten durch eine mechanische Verbindung angedeutet und stellt zweckmäßig eine kraftschlüssige Verbindung zwischen beiden Einheiten her. Ergänzend oder alternativ kann der zweite, innere Führungskanal 14.9 jedoch auch von einer NC- Achse oder einem Linearmotor angetrieben sein, wobei die Steuerung der NC-Achse oder des Linearmotors hierbei zweckmäßig durch den Drehautomaten erfolgt und der Spindelstock mit dem zweiten, inneren Führungskanal durch eine elektronische Verbindung gekoppelt ist.
Eine solche NC-Achse oder ein Linearmotor kann auch in Art und Weise eines Servoantriebs zur Verringerung der von dem Spindelstock aufzubringenden Kräfte beitragen. In diesem Fall können die Antriebe auch ohne NC-Steuerung gefahren werden, wobei der Antrieb direkt durch das Lademagazin erfolgen kann.

Handelt es sich bei dem Spindelstock hingegen um einen entlang der Längsachse des Materialstangenmagazins im Wesentlichen feststehenden Spindelstock, wie es insbesondere bei einem Kurzdrehautomaten der Fall ist, kann durch den Spindelstock das Bewegen des zweiten, inneren Führungskanals relativ zum ersten Führungskanal unterbunden werden. Mit anderen Worten, ist in diesem Fall die Bewegung des Spindelstocks gleich Null, wird also der Spindelstock nicht bewegt, ist auch die in Folge bewirkte Bewegung des zweiten, inneren Führungskanals, synchron entlang der Längsachse und relativ zum ersten Führungskanal gleich Null, wird also auch der zweite, innere Führungskanal nicht bewegt. In jedem Fall kann jedoch folglich auf ein zusätzliches Übergangsrohr zwischen Magazin und Spindelstock verzichtet werden.

Das insbesondere bei Fig. 1 dargestellte Materialstangenmagazin beinhaltet ferner eine Schubstange 14.7, insbesondere mit einem Greifer bzw. einer Spannhülse 14.13, mit der eine Materialstange gehalten wird und z.B. über einen Antrieb 14.6 in Längsrichtung durch die Spindelstockrückseite dem Drehautomaten zuführbar ist. Die Schubstange 14.7 ist somit entlang der Längsachse, insbesondere koaxial zur Längsachse einer jeweils geführten Materialstange bewegbar und zum Vorschub der Materialstangen geeignet. Insbesondere, um auch das vom Spindelstock entfernte Ende der Materialstange möglichst weit in Richtung des Spindelstocks vorschieben zu können, stellt der im Inneren des ersten Führungskanals gelagerte innere, zweite Führungskanal 14.9 zweckmäßig einen Durchgang zur Führung der Materialstangen mit einer Öffnungsweite bereit, durch welche sich auch die Schubstange erstrecken kann bzw. ist die Schubstange 14.7 zweckmäßig in ihrem Querschnitt derart dimensioniert, dass sie sich beim Vorschub einer jeweiligen Materialstange auch noch durch die Öffnungsweite des Durchgangs des inneren Führungskanals 14.9 erstrecken kann.

Die Schubstange bzw. der Antrieb 14.6 ist in praktischer Ausführung ferner zweckmäßig unabhängig von dem zweiten inneren Führungskanal 14.9 bewegbar. Auch kann eine Synchronisierungseinrichtung 14.12 (vgl. Fig. 1) zur zusätzlichen Koordinierung der Stangenbewegung, insbesondere zur Vermeidung von Wegeungenauigkeiten beim Vorschub der Stangen eingesetzt werden.

Insbesondere, um sich aufgrund des Führens der Materialstangen gegebenenfalls einstellenden Abnutzungserscheinungen des zweiten, inneren Führungskanals entgegenzuwirken, ist das Innere dieses zweiten, Führungskanals, besonders bevorzugt jedoch auch das Innere des ersten Führungskanals, mit einem Einsatz 14.16 aus verschleißarmen Material versehen, z.B. in Art einer aus widerstandsfähigem Material gebildeten Schutzschicht. Aufgrund der hervorragenden mechanischen Eigenschaften eignet sich beispielsweise Polyurethan als ein solches Widerstandsfähiges Material für eine im inneren Kanal angeordnete Schutzschicht. Ergänzend oder alternativ, kann die Innenwandung dieses zweiten Führungskanals auch mit einer speziell schwingungsdämpfenden Materialschicht als Einsatz 14.16 ausgekleidet sein bzw. ein solches schwingungsdämpfendes Material als Einsatz 14.16 integrierend umfassen.

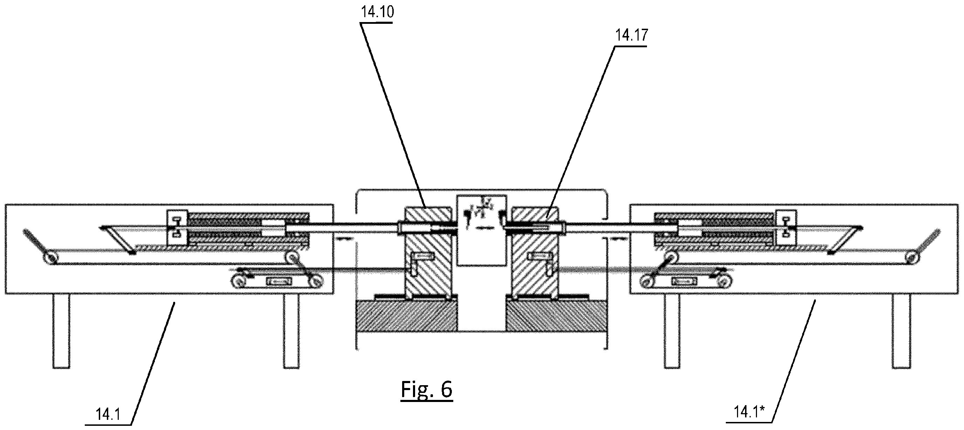

Wie in Fig. 6 dargestellt, sind Drehautomaten häufig mit einem Gegenspindelstock 14.17 ausgestattet, der zur Rückseitenbearbeitung von Werkstücken dient.
Ein solcher Gegenspindelstock übernimmt die Werkstücke während der Bewegung in Z-Richtung von dem Spindelstock 14.10 bzw. Hauptspindelstock des Drehautomaten. Ein fertiges Werkstück wird dabei in der Regel durch eine Hohlbohrung der Spindel entnommen, indem z.B. eine federbeaufschlagte Spannhülse über das Werkstückende geschoben wird, die an einer an einer Schubstange befestigt ist. Während der Entnahme öffnet
sich die Spannvorrichtung des Gegenspindelstocks, so dass das Werkstück nach hinten durch die Spindel herausgezogen wird. Der Aufbau einer an einem Gegenspindelstock bereitgestellten Vorrichtung zum Entladen kann einem Lademagazin zum Zuführen bekanntermaßen sehr ähnlich sein. Für bestimmte Anwendungen, insbesondere bei der Bearbeitung von Werkstücken, die wesentlich länger als die Spindel ausfallen, sind daher auf der Gegenspindelstockseite in der Regel die gleichen oder zumindest ähnliche Funktionalitäten erforderlich, wie bei den Lademagazinen auf der Seite des Hauptspindelstocks zum Beladen des Drehautomaten.
Wie in Fig. 6 daher dargestellt, ist ein erfindungsgemäßes Materialstangenmagazin bevorzugt auch zum Herausführen von Materialstangen und Entladen des Drehautomaten zu verwenden, da aufgrund des in Z-Richtung verschiebbaren Gegenspindelstocks 14.17 die gleichen Schwingungsprobleme und Anbindungsprobleme wie auf der Beladeseite bestehen. Fig. 6 zeigt somit ein besonders bevorzugtes System, das einen Drehautomaten, ein erstes, als Lademagazin eingesetztes Materialstangenmagazin 14.1, und ein zweites, als Entlademagazin eingesetztes Materialstangenmagazin 14.1 besitzt, wobei jedoch das Lademagazin mit einem als Hauptspindelstock ausgebildeten Spindelstock 14.10 des Drehautomaten gekoppelt ist, und das zweite mit einem als Gegenspindelstock 14.17 ausgebildeten Spindelstock gekoppelt ist.

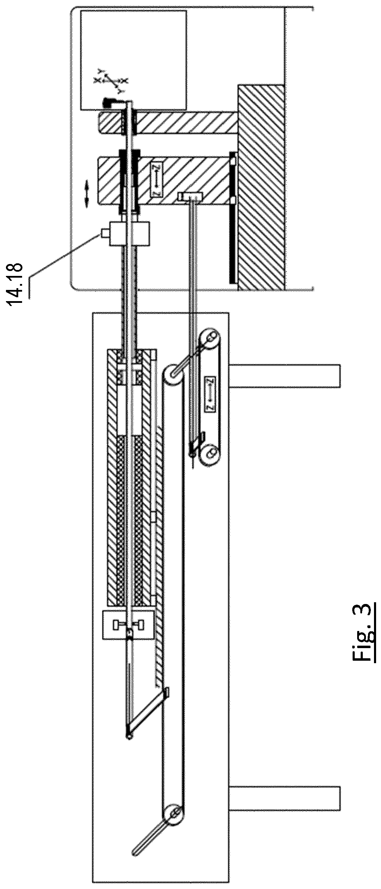

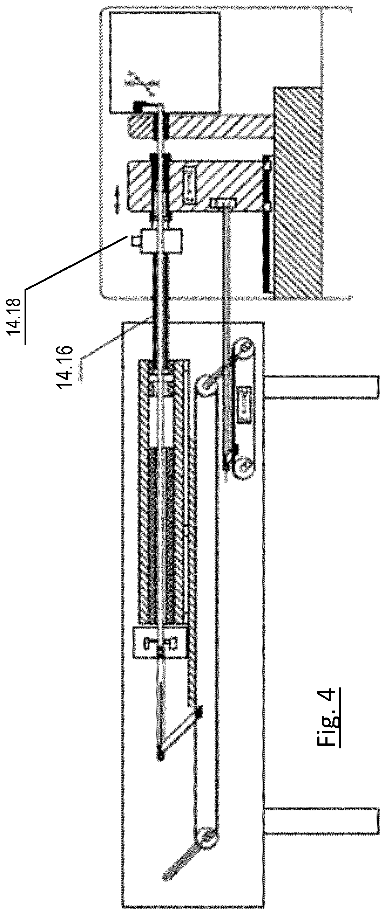

Die Fign. 3 und 4 zeigen ferner Ausführung eines erfindungsgemäßen Systems mit Lademagazin, wobei an dem in Richtung des Spindelstocks blickenden Ende des inneren Führungskanals an der zum Materialstangenmagazin gerichteten Seite zusätzlich eine Lünette 14.18 vorgesehen ist. Von Vorteil ist hierbei ferner, dass eine, üblicherweise als letzte Stützstelle der Materialstange eingesetzte Lünette möglichst nahe an das Ende der Spindel rückt, unter Nutzung der Erfindung folglich insbesondere noch näher rücken kann und somit das Potential zum Ausschwingen der Materialstange nochmals wesentlich verringern kann. Eine solche Lünette bildet somit eine nochmalige letzte Stützstelle der Materialstangen, wobei diese in zweckmäßiger Weise mit einstellbaren Rollen- oder Backenabstützungen ausgebildet sein kann. Ergänzend oder alternativ kann eine solche oder ähnlich ausgebildete Lünette auch direkt am Spindelstock vorgesehen sein.

Aus der vorstehenden Beschreibung wird offensichtlich, dass mit dem erfindungsgemäßen Lademagazin und dem erfindungsgemäßen System der Abstand zwischen den Führungselementen, d.h. insbesondere dem zweiten, inneren Führungskanal und gegebenenfalls der Lünette, des Lademagazins und Spannzange des Spindelstocks erheblich verringert wird und auch im Falle des Einsatzes von verfahrbaren Spindelstöcken konstant über alle Betriebsphasen hinweg bleibt, sodass die Möglichkeiten zur Schwingungsentstehung noch wesentlich weiter eingeschränkt werden.

## Patentansprüche

1. System umfassend
einen Drehautomat und ein Materialstangenmagazin (14.1) zum Führen von Materialstangen an dem Drehautomaten, insbesondere zum Be- und/oder Entladen des Drehautomaten, mit wenigstens, insbesondere einem entlang einer Längsachse des Materialstangenmagazins verschiebbaren Spindelstock (14.10), wobei das Materialstangenmagazin ein materialstangenführendes Kanalsystem mit einem Kanalöffnungssystem beinhaltet, **dadurch gekennzeichnet, dass** das Kanalsystem des Materialstangenmagazins einen ersten, äußeren Führungskanal (14.3, 14.4) und einen im Inneren des ersten Führungskanal relativ zu diesem entlang zur Längsrichtung beweglich gelagerten zweiten, inneren Führungskanal (14.9) besitzt, wobei der zweite, innere Führungskanal (14.9) an den Spindelstock (14.10) des Drehautomaten koppelbar ist oder gekoppelt (14.8) ist, und zwar zum Bewegen des zweiten, inneren Führungskanals in Folge einer Positionsveränderung des Spindelstocks entlang der Längsachse des Materialstangenmagazins im Schleppbetrieb mit diesem synchron entlang der Längsachse und relativ zum ersten Führungskanal.

2. System nach Anspruch 1, wobei der zweite, innere Führungskanal (14.9) mit dem Spindelstock (14.10) des Drehautomaten durch eine mechanische Verbindung miteinander gekoppelt und mit diesem kraftschlüssig verbunden ist, und/oder, wobei der zweite, innere Führungskanal (14.9) von einer NC- Achse oder einem Linearmotor angetrieben ist, wobei die Steuerung der NC-Achse oder des Linearmotors durch den Drehautomaten erfolgt und der Spindelstock mit dem zweiten, inneren Führungskanal durch eine elektronische Verbindung gekoppelt ist.

3. System nach Anspruch 1 oder 2, wobei der zweite, im Inneren des ersten Führungskanals gelagerte innere Führungskanal (14.9) zwischen einer ersten Position, in welcher der zweite Führungskanal maximal eingefahren ist und einer zweiten Position bewegbar ist, in welcher der zweite Führungskanal aus dem ersten Führungskanal maximal ausgefahren ist.

4. System nach Anspruch 1, 2 oder 3, wobei zur Lagerung des zweiten, im Inneren des ersten Führungskanals gelagerten inneren Führungskanal (14.9), im in Richtung des Spindelstocks blickenden Endbereich, insbesondere an der Materialstangenaustrittsseite, des ersten Führungskanals eine Abstützeinrichtung (14.12) angeordnet ist, durch welche sich der im Inneren des ersten Führungskanals gelagerte innere Führungskanal dauerhaft erstreckt.

5. System nach einem der Ansprüche 1 bis 4, wobei das Materialstangenmagazin eine Schubstange (14.7) umfasst, die entlang einer Längsachse bewegbar und zum Vorschub der Materialstangen geeignet ist und wobei der im Inneren des ersten Führungskanals gelagerte innere Führungskanal (14.9) einen Durchgang zur Führung der Materialstangen mit einer Öffnungsweite bereitstellt, durch welche sich auch die Schubstange erstrecken kann.

6. System nach Anspruch 5, wobei die Schubstange unabhängig von dem zweiten inneren Führungskanal bewegbar ist.

7. System nach einem der Ansprüche 1 bis 6, wobei an dem in Richtung des Spindelstocks blickenden Ende des inneren Führungskanals (14.9) oder am Spindelstock an der zum Materialstangenmagazin gerichteten Seite zusätzlich eine Lünette (14.18) vorgesehen ist, die zweckmäßiger Weise einstellbare Rollen- oder Backenabstützungen als eine nochmalige letzte Stützstelle der Materialstangen bildet.

8. System nach einem der Ansprüche 1 bis 7, wobei das Materialstangenmagazin an einem als Hauptspindelstock ausgebildeten Spindelstock des Drehautomaten zum Zuführen von Materialstangen und Beladen des Drehautomaten mit Materialstangen gekoppelt oder koppelbar ist, oder
wobei das Materialstangenmagazin an einem als Gegenspindelstock (14.17) ausgebildeten Spindelstock des Drehautomaten zum Herausführen von Materialstangen und Entladen des Drehautomaten gekoppelt oder koppelbar ist.

9. System nach einem der Ansprüche 1 bis 8, wobei das Materialstangenmagazin zur Bereitstellung einer Gleitlagerung der durch den inneren Führungskanal geführten Materialstangen ein hydraulisches oder ein pneumatisches Versorgungssystem (14.15) besitzt, welches mit dem Durchgang des inneren Führungskanals zur Führung der Materialstangen kommuniziert.

10. System nach einem der Ansprüche 1 bis 9, wobei im äußeren Führungskanal zur Lagerung (14.5) des inneren Führungskanal ein Wälzlager oder Rollenlager angeordnet ist.

11. System nach einem der Ansprüche 1 bis 10, wobei zur Lagerung des inneren Führungskanal im äußeren Führungskanal eine Gleitlagerung vorgesehen ist, wobei das Materialstangenmagazin zweckmäßig ein pneumatisches oder hydraulisches Versorgungssystem umfasst, welches mit dem Durchgang des äußeren Führungskanals, in welchem der innere Führungskanal gelagert ist, kommuniziert.

12. System nach einem der Ansprüche 1 bis 11, wobei die Innenwandung des zweiten Führungskanals mit einer Schicht aus schwingungsdämpfenden und/oder widerstandsfähigem Material ausgekleidet ist und/oder ein schwingungsdämpfendes und/oder widerstandsfähiges Material integrierend umfasst.

13. Materialstangenmagazin zum Führen von Materialstangen an einem Drehautomaten, insbesondere zum Be- und/oder Entladen des Drehautomaten, mit wenigstens einem, insbesondere entlang einer Längsachse des Materialstangenmagazins verschiebbaren Spindelstock (14.10), wobei das Materialstangenmagazin ein materialstangenführendes Kanalsystem mit einem Kanalöffnungssystem beinhaltet,
**dadurch gekennzeichnet, dass** das Kanalsystem des Materialstangenmagazins einen ersten, äußeren Führungskanal (14.3, 14.4) und einen im Inneren des ersten Führungskanal relativ zu diesem entlang zur Längsrichtung beweglich gelagerten zweiten, inneren Führungskanal (14.9) besitzt, wobei der zweite, innere Führungskanal (14.9) an den Spindelstock (14.10) des Drehautomaten koppelbar und in Folge einer Positionsveränderung des Spindelstocks (14.10) entlang der Längsachse des Materialstangenmagazins zusammen mit diesem im Schleppbetrieb synchron entlang der Längsachse und relativ zum ersten Führungskanal (14.3, 14.4) bewegbar ist.

14. Materialstangenmagazin nach vorstehendem Anspruch mit den Merkmalen eines Materialstangenmagazins gemäß einem System nach einem der vor dem vorstehenden Ansprüche 1 bis 12.
